**Europäisches Patentamt**

**European Patent Office**

**Office européen des brevets**

(19)

(11) Veröffentlichungsnummer: **0 212 638**
**B1**

(12) EUROPÄISCHE PATENTSCHRIFT

(45) Veröffentlichungstag der Patentschrift:
29.03.89

(51) Int. Cl.⁴: **F16B 25/10**

(21) Anmeldenummer: 86111573.1

(22) Anmeldetag: 21.08.86

(54) Selbstschneidende Gewindebuchse für Kunststoffe.

(30) Priorität: 22.08.85 DE 3530083

(43) Veröffentlichungstag der Anmeldung:
04.03.87 Patentblatt 87/10

(45) Bekanntmachung des Hinweises auf die Patenterteilung:
29.03.89 Patentblatt 89/13

(84) Benannte Vertragsstaaten:
DE FR GB IT SE

(56) Entgegenhaltungen:
EP-A- 0 024 528
EP-A- 0 088 366
EP-A- 0 104 552
EP-A- 0 109 528
DE-C- 2 754 870

(73) Patentinhaber: Böllhoff & Co, GmbH & Co KG,
Archimedesstrasse 1-4, D-4800 Bielefeld 14(DE)

(72) Erfinder: Kobusch, Klaus, Torfstichweg 8,
D-4800 Bielefeld 1(DE)

(74) Vertreter: Dipl.-Ing. H. Hauck Dipl.-Phys. W. Schmitz
Dipl.-Ing. E. Graalfs Dipl.-Ing. W. Wehnert Dr.-Ing. W.
Döring, Mozartstrasse 23, D-8000 München 2(DE)

ACTORUM AG

## Beschreibung

Die Erfindung betrifft eine selbstschneidende Gewindebuchse für Teile aus Kunststoff mit den im Oberbegriff des Patentanspruchs 1 angegebenen Merkmalen.

Derartige Gewindebuchsen sind zum Einsetzen in Teile aus verhältnismässig weichen aber auch spröden Kunststoffen bestimmt, um die Tragfähigkeit und die Verschleissfestigkeit bei wiederholt lösbaren Schraubverbindungen zu erhöhen. Infolge des grossen Aussendurchmessers der Gewindegänge gegenüber dem Kerndurchmesser und der grossen Steigung der Gewindegänge ergibt sich eine verhältnismässig grosse Tragkraft, wenn die Gewindebuchse in eine Bohrung eingedreht wird und dabei ihr Gewinde selbst einschneidet. Dabei wird das beim Gewindeschneiden verdrängte Material in die Zwischenräume zwischen die Gewidegänge gedrückt. Es ist bekannt (DE-C 2 754 870), zwischen den Gewindegängen im Bereich des Kerns einer Schraube eine Einschnürung vorzusehen, welche zur Aufnahme des beim Eindrehen von den Gewindegängen verdrängten Werkstoffs dient, so dass die Gewindegänge voll bis zu ihrem Fuss hin in das Material eindringen können und damit die Tragkraft vergrössert wird. Von der mittig zwischen den Gewindegängen liegenden Einschnürung aus steigt das Profil jeweils geradlinig zu den Fusspunkten der Gewindegänge an. Bei einer anderen bekannten gewindeselbstformenden Schraube (EP-A 0 088 366) vergrössert sich der Flankenwinkel von der Spitze jedes Gewindegangs aus stetig bis zum Gewindegrund. Auch hier ist das Gewindeprofil symmetrisch.

Das Formwerkzeug zum Herstellen des Gewindes weist eine bestimmte Breite auf, so dass ein Teil des Schraubenschaftes unterhalb des Schraubenkopfes nicht mit dem Gewinde versehen werden kann.

Die der Erfindung zugrundeliegende Aufgabe besteht darin, die Gewindebuchse der eingangs geschilderten Art so weiterzubilden, dass ihre Tragkraft beim Eindrehen in Teile aus Kunststoff weiter erhöht und die Fertigung solcher Buchsen vereinfacht wird.

Durch die Gewindeform selbst wird die Tragfähigkeit des Gewindes erhöht. Wenn sich die Einschnürung unmittelbar an der in Einschraubrichtung gesehen vorderen Flanke der Gewindegänge befindet, kann dort das beim Eindrehen verdrängte Material unmittelbar in die Ausrundung eintreten. Die in Einschraubrichtung gesehen hintere Flanke der Gewindegänge zusammen mit den zur Ausrundung hin konisch sich verjüngenden Rampen vermittelt eine sehr hohe Tragkraft in dem Kunststoff, auf Grund der in Auszugsrichtung wirkenden flachen Flanke und dem dadurch hohen Gewindereibwertanteil.

Ist darüber hinaus der als Anschlag dienende Flansch der Gewindebuchse an dieser angenietet, so kann vor dem Befestigen des Ringflansches die Außenfläche der Gewindebuchse über ihre gesamte Länge hinweg in einfacher Weise mit dem tragenden Gewinde versehen werden. Damit ist ebenfalls die Tragfähigkeit vergrößert, da die Gewindelänge bei unveränderter Länge der Buchse größer geworden ist. Außerdem muß bei der Herstellung solcher Gewindebuchsen mittels spanender Verformung nicht vom Außendurchmesser des Flansches, sondern vom Gewindeaußendurchmesser ausgegangen werden, so daß die Zerspanungsarbeit wesentlich geringer und die Herstellung wirtschaftlicher ist.

Ein Ausführungsbeispiel der Erfindung ist nachstehend anhand der Zeichnung näher erläutert. Es zeigt:

Fig. 1 eine Ansicht bzw. einen Schnitt durch eine Gewindebuchse und

Fig. 2 eine vergrößerte Darstellung des Gewindeprofils der Gewindebuchse.

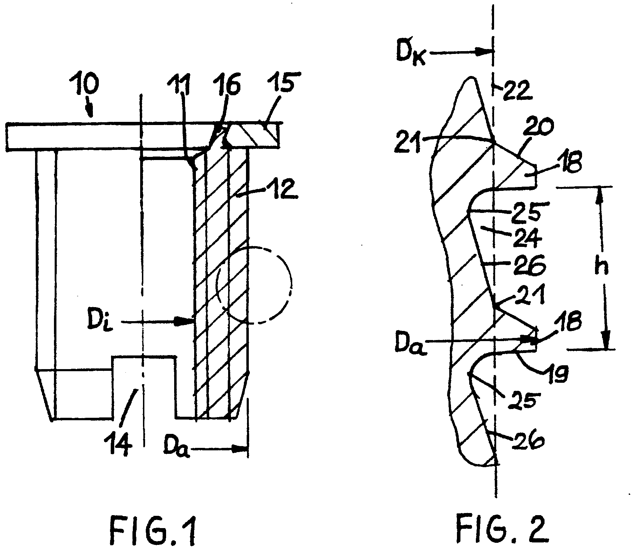

Die in Figur 1 dargestellte Gewindebuchse 10 weist ein durchgehendes Innengewinde 11 und ein Außengewinde 12 zum Eindrehen der Gewindebuchse in ein Teil aus Kunststoff auf. Um das Selbstschneiden des Gewindes zu verbessern, ist in bekannter Weise an der Vorderseite der Gewindebuchse eine Ausnehmung 14 eingefräst. Ferner weist die Gewindebuchse einen Flansch 15 auf, so daß die Buchse nur so weit in den Kunststoff eingeschraubt werden kann, bis sich die Unterseite des Flansches 15 auf die Kunststoffoberfläche auflegt und anschließend dieser Flansch ein Gegenlager für das zu befestigende Teil bildet.

Zur Herstellung der Gewindebuchse wird von einem zylindrischen Rohr mit dem Außendurchmesser $D_a$ und dem Innendurchmesser $D_i$ ausgegangen und das Innengewinde 11 und das Außengewinde 12 angefertigt. Anschließend werden die Buchsen abgelängt und durch eine Ausnehmung am Außenumfang ein Kragen 16 ausgebildet, dessen Länge gleich der Dicke des Ringflansches 15 nach dem Vernieten ist. Die Ringscheibe 15 wird auf den Kragen 16 aufgesetzt und dann durch leicht konisches Aufweiten des Kragens 16 eine Vernietung herbeigeführt. Auf diese Weise kann die gesamte Länge der Gewindebuchse 10 mit dem Außengewinde 12 versehen werden. Das Außengewinde 12 reicht also bis unmittelbar unter den Flansch 15 heran.

Das Profil des Außengewindes 12 ist in Figur 2 im einzelnen dargestellt. Um eine hohe Tragkraft in weiche und auch spröde Kunststoffe zu erzielen, ist die Steigung h der Gewindegänge 18 groß und der Außendurchmesser $D_a$ gegenüber dem Kerndurchmesser $D_k$ verhältnismäßig groß, so daß sich verhältnismäßig große radiale Längen der vorderen Flanken 19 und hinteren Flanken 20 − jeweils in Einschraubrichtung gesehen − ergeben. In Figur 2 liegt der Kerndurchmesser $D_k$ auf der durch den Fuß 21 der Gewindegänge 18 schneidenden gestrichelten Linie 22. Diese Linie 22 bildet auch den Kernlochdurchmesser für das selbstzuschneidende Gewinde, wobei der Fuß 21 für eine Zentrierung sorgt und ein Schiefeinlaufen verhindert.

Um das beim Eindrehen der Gewindebuchse von den Gewindegängen nach innen verdrängte Material aufzunehmen, ist eine Einschnürung 24 zwischen den aufeinanderfolgenden Gewindegähgen 18 vorgesehen. Diese Einschnürung 24 wird von dem in Figur 2 dargestellten Profil gebildet. Dabei liegt die engste Stelle 25 der Einschnürung 24 in unmittelbarer Nähe der jeweils vorderen Flanke 19 der Gewindegänge. Wie aus Figur 2 erkennbar ist, schließt sich die Einschnürung 25 über einen verhältnismäßig kleinen Krümmungsradius an die Vorderflanke 19 an. Die Vorderflanke 19 verläuft im wesentlichen senkrecht zur Längsachse der Gewindebuchse, um beim Selbstschneiden des Gewindes die Reibung auf ein Mindestmaß zu reduzieren.

Die jeweils hintere Flanke 20 der Gewindegänge 18 verläuft dagegen in einem spitzen Winkel zur Front der Vorderflanke. Vom Fuß 21 der hinteren Flanke 20 ausgehend verjüngt sich das Profil 24 längs einer verhältnismäßig langen Rampe 26 gleichmäßig bis zur Einschnürung 25.

Das in Figur 2 dargestellte Profil kann auch für Bolzen Verwendung finden. Bei einem Ausführungsbeispiel für eine Gewindebuchse mit M10 als Innengewinde beträgt der Außendurchmesser $D_a$ 14 mm, der Kerndurchmesser 13,2 mm und der Durchmesser an der Stelle der Einschnürung 25 beträgt 12,6 mm. Der Winkel zwischen der Vorderflanke 19 und der Senkrechten zur Längsachse beträgt 3° und der Winkel der hinteren Flanke 20 zur Senkrechten 30°. Dies entspricht der DIN-Vorschrift für Sägezahnprofile.

Der Winkel zwischen der Linie 22 und der Rampe 26 beträgt 15°. Der Krümmungsradius zwischen der vorderen Flanke 19 und der Einschnürung 25 beträgt 0,5 mm und die Steigung h beträgt 2 mm.

## Patentansprüche

1. Selsbtschneidende Gewindebuchse für Teile aus Kunststoff, bei der der Kerndurchmesser gegenüber dem Aussendurchmesser der Gewindegänge verhältnismäßig klein und die Steigung der Gewindegänge verhältnismäßig gross ist und bei der der Kernbereich zwischen den Gewindegängen ein Profil aufweist, das sich ausgehend von den Gewindegängen zu einer Einschnürung verjüngt, dadurch gekennzeichnet, dass die Einschnürung (25) sich jeweils in Einschraubrichtung gesehen über einen so kleinen Krümmungsradius an die vordere Flanke (19) jedes Gewindeganges (18) anschliesst, dass die engste Stelle der Einschnürung in unmittelbarer Nähre der vorderen Flanke liegt, und das Profil von der Einschnürung (25) aus geradlinig zur hinteren Flanke (20) des nächsten Gewindegangs ansteigt.

2. Selbstschneidende Gewindebuchse nach Anspruch 1, mit einem als Anschlag beim Einschrauben in das Teil dienenden Ringflansch, dessen Durchmesser grösser als der Gewindeaussendurchmesser ist, dadurch gekennzeichnet, dass der Ringflansch (15) eine auf einem Kragen (16) der Gewindebuchse aufgesetzte und mit dem Kragen vernietete Ringscheibe ist und die gesamte Länge der Gewindebuchse mit dem Aussengewinde (12) versehen ist.

3. Selbstschneidende Gewindebuchse nach Anspruch 2, dadurch gekennzeichnet, dass die jeweils in Einschraubrichtung gesehen vordere Flanke (19) der Gewindegänge etwa senkrecht zur Schraubenachse verläuft.

## Claims

1. Self-cutting threaded bushing for parts made of plastic material, wherein the core diameter is comparatively small with respect to the outer diameter of the threads, wherein the pitch of the threads is comparatively large, and wherein the core area between the threads defines a profile which tapers from the threads towards a reduction, characterized in that said reduction (25), as viewed in screwing direction, merges into the forward flank (19) of each thread (18) over such a small radius of curvature that the narrowest point of the reduction is in close proximity of the forward flank, and that the profile rises linearly from said reduction (25) towards the rearward flank (20) of the next thread.

2. Self-cutting threaded bushing as in claim 1, comprising an annular flange serving as an abutment when screwing the bushing into said part and having a diameter greater than the outer diameter of the thread, characterized in that the annular flange (15) is an annular plate placed on a collar (16) of the threaded bushing and riveted to the collar, and that the entire length of the threaded bushing is provided with the outer thread (15).

3. Self-cutting threaded bushing as in claim 2, characterized in that each of the forward flanks (19) of the threads, as viewed in screwing direction, extends generally perpendicularly to the screw axis.

## Revendications

1. Douille filetée autotaraudeuse pour pièces en matière synthétique, dans laquelle le diamètre de l'âme est relativement petit par rapport au diamètre extérieur du filetage et le pas du filetage est relativement grand, et dans laquelle la région de l'âme présente entre les filets un profil lequel va en s'amincissant, depuis les filets jusqu'à une gorge, caractérisée en ce que, vu chaque fois dans la direction du visage, la gorge (25) se raccorde au flanc avant (19) de chaque filet (18) par une incurvation avec un rayon de courbure tellement petit que l'endroit le plus étroit de la gorge se trouve à proximité immédiate du flanc avant le profil va en montant en ligne droite depuis la gorge (25) jusqu'au flanc arrière (20) du filet suivant.

2. Douille filetée autotaraudeuse selon la revendication 1, comportant une collerette annulaire qui sert de butée lors du visage dans la pièce, dont le diamètre est plus grand que le diamètre extérieur du filetage, caractérisée en ce que la collerette annulaire (15) est un disque annulaire rivé sur un collet (16) de la douille filetée et en ce que toute la longueur de la douille filetée est pourvue du filetage extérieur (12).

3. Douille filetée autocoupante selon la revendication 2, caractérisée en ce que, vu chaque fois dans la direction du vissage, le flanc avant (19) des filets est dirigé à peu près perpendiculairement à l'axe du filetage.

FIG.1

FIG. 2